# EUROPÄISCHE PATENTSCHRIFT

(11) **EP 1 102 668 B1**
(45) Veröffentlichungstag und Bekanntmachung des Hinweises auf die Patenterteilung: **03.09.2003**
(21) Anmeldenummer: 98939652.8
(22) Anmeldetag: 03.08.1998
(51) Int. Cl.: B29C 44/12, B29C 33/16

(54) **VERFAHREN ZUM HERSTELLEN EINES SCHAUMKÖRPERTEILES, INSBESONDERE EINES POLSTERSCHAUMTEILES FÜR EINEN FAHRZEUGSITZ**
METHOD FOR PRODUCING A SHAPED FOAM BODY, ESPECIALLY A FOAM PADDING ELEMENT FOR A VEHICLE SEAT
PROCEDE POUR PRODUIRE UN CORPS MOULE EN MOUSSE, NOTAMMENT UN ELEMENT DE REMBOURRAGE EN MOUSSE POUR UN SIEGE DE VEHICULE

(43) Veröffentlichungstag der Anmeldung: 30.05.2001
(73) Patentinhaber: Gottlieb Binder GmbH & Co., 71088 Holzgerlingen (DE)
(72) Erfinder: POULAKIS, Konstantinos, D-01896 Pulsnitz (DE); SCHULTE, Axel, D-71088 Holzgerlingen (DE)
(74) Vertreter: Bartels, Martin Erich Arthur
(86) Internationale Anmeldenummer: EP9804832
(87) Internationale Veröffentlichungsnummer: WO00007792

(56) Entgegenhaltungen:
- WO-A-86/03164
- US-A- 5 654 070

## Beschreibung

Die Erfindung bezieht sich auf ein Verfahren zum Herstellen eines Schaumkörperteiles, insbesondere eines Polsterschaumteiles für einen Fahrzeugsitz, mit den Merkmalen des Oberbegriffes des Patentanspruches 1.

Schaumkörperteile mit eingeschäumten Haftverschlußteilen finden bevorzugt Anwendung als Polsterschaumteile für Sitzelemente, Rückenlehnen oder Kopfstützen, insbesondere bei Fahrzeugsitzen. Die Haftelemente der eingeschäumten Haftverschlußteile dienen hierbei in der Regel dazu, Überzugstoffe, die mit Haftverschlußteilen mit korrespondierenden Haftelementen versehen sind, am betreffenden Polsterschaumteil zu befestigen.

Um die Funktionsfähigkeit der Haftverschlußteile sicherzustellen, ist es beim Einschäumvorgang wesentlich, daß die Haftelemente mittels der schaumabhaltenden Abdeckung gegen ein Eindringen des Schaummaterials sicher geschützt sind, so daß ein Verkleben der Haftelemente vermieden ist. In bekannter Weise kann zu diesem Zweck so vorgegangen werden, daß der Haftverschlußteil an der Vorderseite, an der die Haftelemente freiliegen, mit einem die Haftelemente vollflächig bedeckenden Deckelement in Form einer Lage aus einer Dichtmasse bedeckt wird, die nach dem Einschäumvorgang zur Freilegung der Haftelemente wieder abziehbar ist.

Bei einem in der EP 0 612 485 A1 aufgezeigten, bekannten Haftverschlußteil findet hierbei als Dichtmasse ein thermoplastisches Kunststoffmaterial Verwendung, das nach dem Abziehen einschmelzbar und wiederverwendbar ist.

Trotz Verwendung einer recycelbaren Dichtmasse ist dieses Vorgehen wegen der zusätzlichen Arbeitsschritte für das Aufbringen des Dichtelementes, das Abziehen und die wegen der Wiederverwendung erforderlichen Maßnahmen sehr aufwendig.

Aus der WO-A-86 03164 ist ein die Haftelemente bedechendes Deckelement bekannt, des mittels einer magnetischen Halteeinrichtung in lösbare Anlage mit der Einschäumform gebracht wird.

Durch die US-A-5 654 070 ist ein gattungsgemäßes Verfahren zum Einschäumen von Haftverschlußteilen an Schaumkörperteilen bekannt, mit einer Anordnung von Permanentmagneten an der Einschäumform entlang der seitlichen Ränder der Haftverschlußteile. Bei diesem Verfahren sind gesonderte flexible Kunststoffstreifen als seitliche Dichtungsleisten vorgesehen, die an der Seite des Haftverschlußteils angeordnet sind, die die einzelnen Haftelemente aufweisen und die ein magnetisch anziehbares Material in Pulverform enthalten, welches das bekannte Haftverschlußteil mit den an ihm angeordneten Dichtungsleisten in Anlage mit den Permanentmagneten der Einschäumform hält. Aufgrund der erforderlichen paßgenauen Anbringung dieser gesonderten Dichtungsleisten gestaltet sich die Durchführung des bekannten Verfahrens aufwendig und unwirtschaftlich. Hierzu trägt auch mit bei, um eine sichere Lage des Haftverschlußteils in der Einschäur form mit entsprechend befriedigender Dichtleistung zu erreichen, daß einzelne Metallklammern In das Haftverschlußteil einzubringen sind, die dann mit Permanentmagneten in der Einschäumform wechselwirken, die in der Einschäumform unterhalb der Haftelemente angebracht sind. Trotz dieser zusätzlichen Maßnahme hat es sich in der Praxis gezeigt, daß die Abdichtwirkung bei der Realisierung des bekannten Verfahrens nicht zufriedenstellend ist.

Ausgehend von diesem Stand der Technik stellt sich die Erfindung die Aufgabe, ein Verfahren aufzuzeigen, das die Herstellung von Schaumkörpertei len mit eingeschäumten Haftverschlußteilen auf besonders sichere Weise ermöglicht, wobei insbesondere die Gefahr vermieden ist, daß in den Bereich der Haftelemente eindringendes Schaummaterial zu einem Verkleben derselben führt.

Bei einem Verfahren der eingangs genannten Art ist diese Aufgabe erfindungsgemäß durch die im kennzeichnenden Teil des Anspruchs 1 aufgeführten Merkmale gelöst.

Aufgrund dieser erfindungsgemäßen Anordnung ist sichergestellt, daß jedenfalls die den Bereich der Haftelemente umgebenden Ränder der Abdeckung durch die in diesen Randbereichen wirkenden Magnetkräfte in fester, abdichtender Anlage an der Einschäumform gehalten sind, so daß die Abdichtwirkung unmittelbar in den hinsichtlich des Eindringens von Schaummaterial gefährdeten Randbereichen sichergestellt ist.

Es hat sich hierbei gezeigt, daß mit der erfindungsgemäßen Ausgestaltung sich deutlich bessere Abdichtergebnisse erhalten lassen als mit den bekannten Lösungen.

Des weiteren wird sichergestellt, daß durch die Anwendung von aufkaschiertem Vlies oder Filz als Abdeckung eine gute Bindung mit dem Schaummaterial erreicht ist gegenüber der aus der US-A-5 654 070 bekannten Lösung, die auf einem Kunststoffträger mit den Haftelementen, auf der gegenüberliegenden Seite, die frei von jedweder Abdeckung ist, zusätzliche Ankerelemente als Verankerungsmöglichkeit für den Schaum benötigt.

Vorzugsweise werden die Haftelemente beim Einschäumvorgang in einer in die formgebende Wand der Einschäumform eingearbeiteten Ausnehmung aufgenommen, über deren Randbereich hinaus die Abdeckung mit vorgegebener Randbreite schaumabdichtend übersteht und mit den Randbereichen der Ausnehmung mittels der Halteeinrichtung in Anlage gebracht wird.

Die ferromagnetische Beschichtung der Abdeckung kann beispielsweise eine Beschichtung aus Polyurethan sein, wie sie unter der Bezeichnung SU-9182 von der Firma Stahl vertrieben wird, die beigemengte Fe-Partikel der Korngrüße < 10µ als ferromagnetisches Material enthält.

Als der Einschäumform zugehöriger Teil der Halteeinrichtung können Permanentmagnete verwendet werden, beispielsweise in Form einer Reihe von Stabmagneten oder von Magnetleisten, die die in der Wand der Einschäumform ausgebildete Ausnehmung umgeben, in welcher die Haftelemente des einzuschäumenden Haftverschlußteiles aufgenommen werden.

Gegenstand der Erfindung ist auch ein in einen Schaumkörperteil einschäumbares Haftverschlußteil, das die Merkmale des Anspruches 11 aufweist.

Nachstehend ist die Erfindung anhand der Zeichnung im einzelnen erläutert. Es zeigen:
- Fig. 1: eine schematisch vereinfacht und endseitig geschnitten gezeichnete perspektivische Ansicht eines Polsterschaumteiles mit eingeschäumtem Haftverschlußteil;
- Fig. 2: eine der Fig. 1 ähnliche Ansicht eines Polsterschaumteiles mit einem darin vertieft eingeschäumten Haftverschlußteil;
- Fig. 3: einen in vergrößertem Maßstab gezeichneten Teilschnitt eines in eine Einschäumform eingelegten Haftverschlußteiles;
- Fig. 3A: einen stark vergrößert gezeichneten Ausschnitt des in Fig. 3 mit A bezeichneten Bereiches;
- Fig. 4: einen perspektivisch gezeichneten Ausschnitt einer Einschäumform mit eingelegtem Haftverschlußteil;
- Fig. 5: eine schematisch vereinfacht gezeichnete perspektivische Ansicht eines in eine Einschäumform einlegbaren Formteiles für eine Pfeifeneinschäumung und
- Fig. 6 und 7: perspektivische Ansichten des Formteiles von Fig. 5 mit an dieses teilweise bzw. vollständig angelegtem Haftverschlußteil.

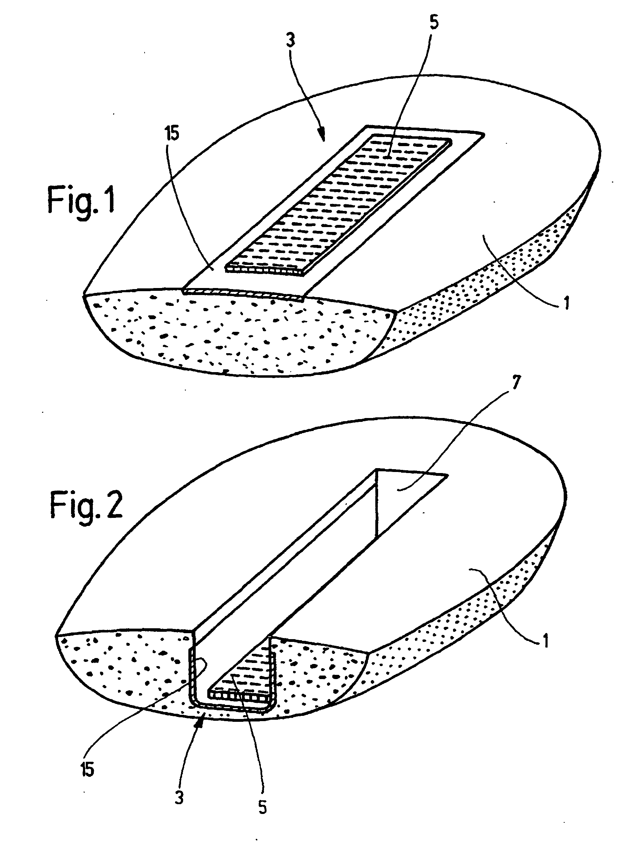

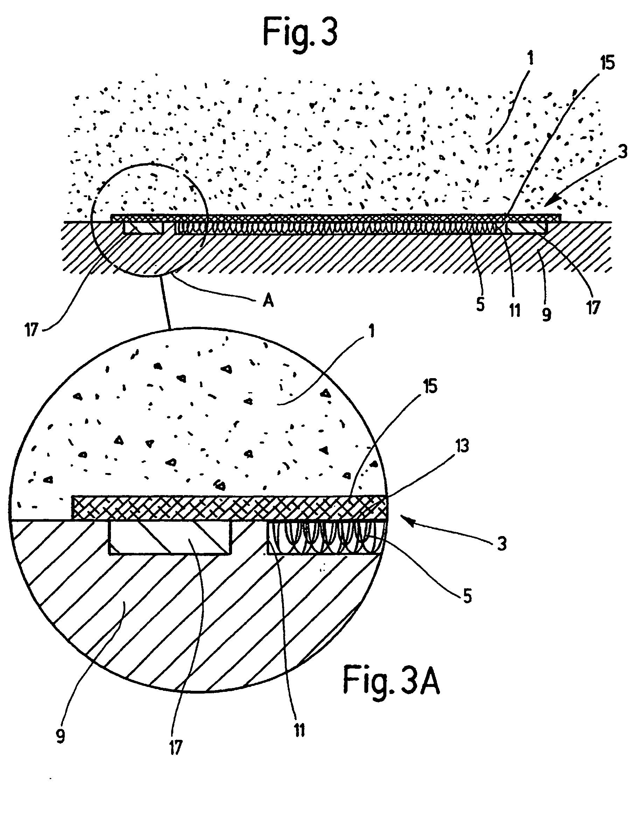

Fig. 1 zeigt einen Teil eines Polsterschaumteiles 1, das an seiner Oberfläche ein zu dieser bündig eingeschäumtes Haftverschlußteil 3 aufweist. An seiner Vorder- oder Verhakungsseite weist das Haftverschlußteil 3 Haftelemente 5 auf, die in bekannter Weise beispielsweise als Schlingen ausgebildet sein können, wie es in Fig. 3 und 3A ersichtlich ist. Die Haftelemente 5 können auch pilzoder hakenförmig ausgebildet sein und dienen zur Verhaftung mit entsprechenden, korrespondierenden Haftelementen eines am Polsterschaumteil 1 anzubringenden Körpers, beispielsweise eines Überzuges.

Bei dem Beispiel von Fig. 2 ist das Haftverschlußteil 3 in eine Vertiefung 7 des Polsterschaumteiles 1 eingeschäumt, so daß die Haftelemente 5 nicht bündig zur Oberfläche angeordnet sind.

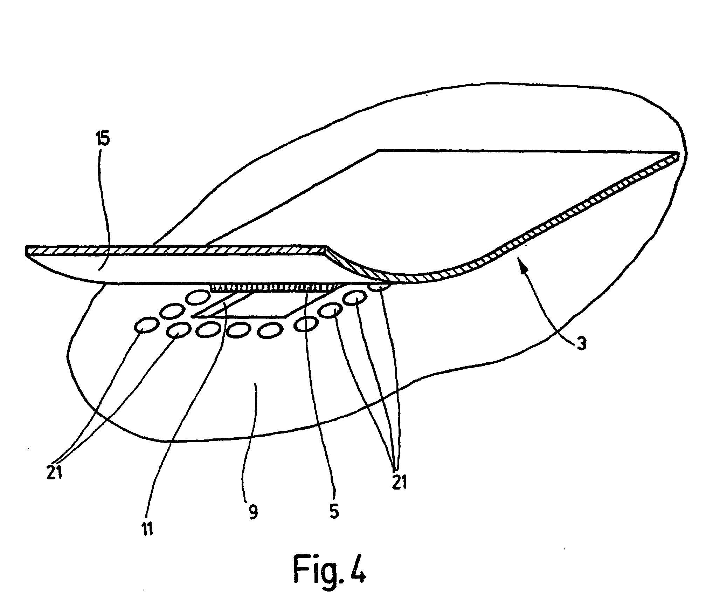

Fig. 3 und 4 verdeutlichen das Einschäumen des Haftverschlußteiles 3 in bündig zur Oberfläche des Polsterschaumteiles 1 verlaufender Anordnung. Hierbei wird eine Einschäumform verwendet, deren formgebende Wand 9 im Bereich des Haftverschlußteiles 3 eine Ausnehmung 11 aufweist, die dem Flächenbereich der Haftelemente 5 des Haftverschlußteiles 3 angepaßt ist, so daß bei Anlegen desselben an die Wand 9 der Einschäumform die Haftelemente 5 in der Ausnehmung 11 aufgenommen sind. Wie am deutlichsten aus Fig. 3A ersichtlich ist, sind die Haftelemente 5 mittels einer eine Fesiverklebung bildenden Haftschicht 13 mit einer auf die Haftschicht 13 aufkaschierten Abdeckung 15 verbunden. Diese besteht aus einem eine gute Bindung mit dem Schaummaterial eingehenden Material, beispielsweise einem Vlies oder Filz. Die Abdeckung 15 erstreckt sich mit ihren äußeren Randbereichen über den Flächenbereich der Haftelemente 5 und der in der Wand 9 der Einschäumform ausgebildeten Vertiefung 11 hinaus, wobei die überstehende Randbreite der Abdeckung 15 so gewählt ist, daß die Randbereiche Permanentmagnete übergreifen, die in Fig. 3 und 3A als Magnetleisten 17 dargestellt sind. Die Abdeckung 15 ist mit einer ferromagnetischen Beschichtung versehen, beispielsweise mit einer Polyurethanbeschichtung mit zugesetzten Fe-Partikeln, wodurch der Abdeckung 15 ferromagnetische Eigenschaften verliehen werden, so daß die Randbereiche an den Magnetleisten 17 lösbar anhaften. Diese Anlage der Randbereiche der Abdeckung 15, um den Bereich der in der Ausnehmung 11 der Wand 9 aufgenommenen Haftelemente 5 herum, bildet eine Schaumabdichtung, die beim Einschäumvorgang einen Zutritt des Schaummaterials zu den Haftetementen 5 verhindert.

Die feste Verbindung der Haftelemente 5 mit der Abdeckung 15 kann, abweichend von der schematisierten Darstellung der Fig. 3A, unmittelbar über die Ferromagnetika enthaltende Beschichtung erfolgen, wobei es sich beispielsweise um Kunstharz oder Polyvrethan, insbesondere das Polyurethan SU-9182 der Firma Stahl, handeln kann. Femer kann eine zur ferromagnetischen Beschichtung zusätzliche Haftschicht 13 vorgesehen sein, beispielsweise aus einem feuchtigkeitsvemetzenden Polyurethan (z.B. Tivomelt 9617-11 der Firma Tivoli) oder aus Kunstharz .

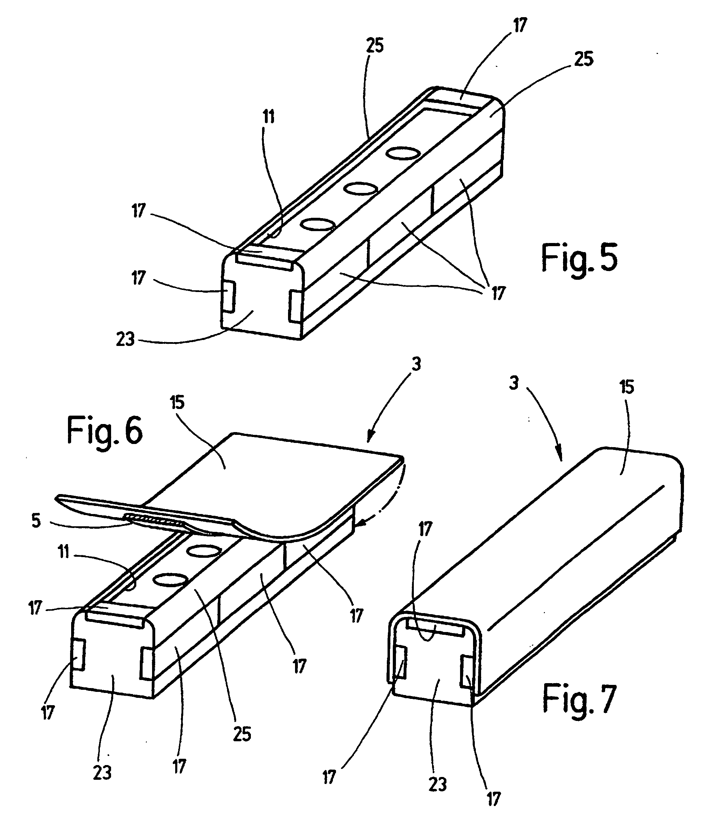

Fig. 4 verdeutlicht die Verwendung einer Gruppe von Stabmagneten 21 anstelle der in Fig. 3 und 3A gezeigten Magnetleisten 17. Die Stabmagnete 21 sind, wie Fig. 4 zeigt, rings um die Ausnehmung 11 in der Wand 9 der Einschäumform so angeordnet, daß die Ränder der ferromagnetischen Abdeckung 15 an der Wand 9 in dichter Anlage gehalten sind. Fig. 5 bis 7 verdeutlichen den Vorgang der sogenannten Pfeifeneinschäumung, wobei das Haftverschlußteil 3 in der Vertiefung 7 des betreffenden Polsterschaumteiles 1 eingeschäumt wird. Hierfür findet ein an der Wand 9 der Einschäumform verankerbares Formteil 23 Anwendung, in dessen Oberfläche die Vertiefung 11 eingearbeitet ist, in der die Haftelemente 5 des betreffenden Haftverschlußteiles 3 geschützt aufnehmbar sind. An den Schmalseiten der Vertiefung 11 befindet sich Magnetleisten 17 zur Anlage der schmalseitigen Randbereiche der ferromagnetischen Abdeckung 15. Deren langseitige Randbereiche werden, wie Fig. 6 und 7 zeigen, über abgerundete Ränder 25 des Formteiles 23 umgelegt, um mit seitlichen Magnetleisten 17 in schaumabdichtende Anlage zu kommen.

## Patentansprüche

1. Verfahren zum Herstellen eines Schaumkörperteiles, insbesondere eines Polsterschaumteiles (1) für einen Fahrzeugsitz, das mit mindestens einem Haftverschlußteil (3) mit Haftelementen (5) versehen wird, die von einer schaumabhaltenden Abdeckung (15) abgedeckt in einer das Schaumkörperteil erzeugenden Einschäumform (9) aufgenommen werden, wobei die Abdeckung (15) mit einer vorgebbaren Randbreite über den Flächenbereich der Haftelemente (5) überstehend angeordnet und mit einer Halteeinrichtung in lösbare Anlage zumindest mit Teilen der Einschäumform (9) gebracht wird und wobei die Abdeckung (15) mit ferromagnetischen Bestandteilen versehen und als der eine Teil der Halteeinrichtung benutzt wird, deren der Einschäumform (9) zugehöriger anderer Teil durch an dieser angeordnete magnetfelderzeugende Halteelemente (17;21) gebildet wird, an denen die über die Ausnehmung (11) überstehenden Ränder der Abdeckung (15) beim Einschäumvorgang gehalten werden, wobei die Abdeckung (15) sich über den Flächenbereich der Haftelemente (5) erstreckt, **dadurch gekennzeichnet, daß** als Abdeckung (15) eine aufkaschierte Schicht aus Vlies oder Filz verwendet wird, die mit einer sich über den Flächenbereich der Haftelemente (5) erstreckenden ferromagnetischen Beschichtung versehen wird.

2. Verfahren nach Anspruch 1, **dadurch gekennzeichnet, daß** die Haftelemente (5) in einer Ausnehmung (11) der Einschäumform (9) aufgenommen werden und daß die Abdeckung (15) mit der vorgegebenen Randbreite über die Ausnehmung (11) überstehend angeordnet wird.

3. Verfahren nach Anspruch 2, **dadurch gekennzeichnet, daß** als ferromagnetische Beschichtung Polyurethan SU-9182 (Firma Stahl) mit Zusatz von Fe-Partikeln verwendet wird.

4. Verfahren nach Anspruch 3, **dadurch gekennzeichnet, daß** die Abdekkung (15) durch Verkleben (13) mit dem Haftverschlußteil (3) verbunden wird.

5. Verfahren nach einem der Ansprüche 1 bis 4, **dadurch gekennzeichnet, daß** die Abdeckung (15) zusätzlich einen Haftgrund aus Kunstharz oder Polyurethan aufweist.

6. Verfahren nach einem der Ansprüche 1 bis 5, **dadurch gekennzeichnet, daß** als der Einschäumform (9) zugehörige, magnetfelderzeugende Halteelemente Permanentmagnete (17;21), die mit den über die Ausnehmung (11) überstehenden Rändern der Abdeckung (15) zusammenwirken, verwendet werden.

7. Verfahren nach Anspruch 6, **dadurch gekennzeichnet, daß** zur Bildung von Schaumkörperteilen mit in diesen vertieft angeordneten Haftverschlußteilen (3) eine Pfeifeneinschäumung mit in die Einschäumform (9) einlegbaren, die Ausnehmung (11) aufweisenden Formteilen (23) durch geführt wird, an denen die Teil der Halteeinrichtung bildenden Permanentmagnete (17) so angeordnet sind, daß die über die Ausnehmung (11) überstehenden Ränder der Abdeckung (15) beim Einschäumvorgang daran schaumabhaltend gehalten werden.

8. Nach dem Verfahren nach einem der Ansprüche 1 bis 7 herstellbares, in einen Schaumkörperteil einschäumbares Haftverschlußteil (3) mit einer über den Flächenbereich seiner Haftelemente (5) mit vorgegebener Randbreite überstehenden Abdeckung (15), die Teil einer Halteeinrichtung für die lösbare Anlage an Teilen einer zur Erzeugung des Schaumkörperteiles dienenden Einschäumform (9) bildet, wobei die Abdeckung (15) eine aufkaschierte Schicht aus Vlies oder Filz enthält, die mit einer sich über den Flächenbereich der Haftelemente (5) erstreckenden ferromagnetischen Beschichtung versehen ist.

## Claims

1. Method for producing a foam body part, in particular a padded foam part (1) for a vehicle seat, which part is provided with at least one fastening closure part (3) having fastening elements (5) which are received, covered by a foam-restraining cover (15), in a foaming mould (9) which produces the foam body part, the cover (15) being arranged so as to project beyond the face region of the fastening elements (5) by a predeterminable border width and being moved by means of a holding device into releasable abutment at least with parts of the foaming mould (9), and the cover (15) being provided with ferromagnetic constituents and being used as the first part of the holding device, whose other part associated with the foaming mould (9) is formed by holding elements (17; 21) which are arranged thereon and which generate a magnetic field and by means of which the edges of the cover (15) that project beyond the recess (11) are held during the foaming operation, the cover (15) extending beyond the face region of the fastening elements (5), **characterised in that** a laminated layer of fleece or felt is used as the cover (15) and is provided with a ferromagnetic coating which extends over the face region of the fastening elements (5).

2. Method according to claim 1, **characterised in that** the fastening elements (5) are received in a recess (11) of the foaming mould (9) and **in that** the cover (15) is arranged so as to project beyond the recess (11) with the predetermined border width.

3. Method according to claim 2, **characterised in that** polyurethane SU-9182 (Messrs. Stahl) is used as the ferromagnetic coating with the addition of Fe particles.

4. Method according to claim 3, **characterised in that** the cover (15) is connected to the fastening closure part (3) by adhesive bonding (13).

5. Method according to any one of claims 1 to 4, **characterised in that** the cover (15) further has an adhesive base of synthetic resin or polyurethane.

6. Method according to any one of claims 1 to 5, **characterised in that** permanent magnets (17; 21), which co-operate with the edges of the cover (15) that project beyond the recess (11), are used as holding elements which generate the magnetic field and which are associated with the foaming mould (9).

7. Method according to claim 6, **characterised in that**, in order to form foam body parts having fastening closure parts (3) which are arranged embedded therein, a pipe-foaming operation is carried out with shaped parts (23), which can be introduced into the foaming mould (9) and which have the recess (11) and on which the permanent magnets (17) which form part of the holding device are arranged in such a manner that the edges of the cover (15) that project beyond the recess (11) are held thereon during the foaming operation so as to restrain the foam.

8. Fastening closure part (3) which can be produced according to the method according to any one of claims 1 to 7 and which can be foamed into a foam body part, having a cover (15) which projects beyond the face region of the fastening elements (5) thereof with a predetermined border width and which forms part of a holding device for the releasable abutment with parts of a foaming mould (9), which serves to produce the foam body part, the cover (15) containing a laminated layer of fleece or felt which is provided with a ferromagnetic coating which extends over the face region of the fastening elements (5).

## Revendications

1. Procédé pour la fabrication d'un corps en matière plastique expansée, en particulier d'un élément en plastique expansé pour le rembourrage (1) d'un siège automobile, qui est muni d'au moins un élément de blocage par adhérence (3) comprenant des éléments adhérents (5), lesquels, recouverts d'une couverture (15) retenant la matière plastique expansée, sont reçus dans un moule d'expansion (9) produisant le corps en matière plastique expansée ; moyennant quoi la couverture (15) est agencée, avec une bordure de largeur prédéfinie, au-dessus de la surface des éléments adhérents (5) et est, à l'aide d'un dispositif d'ancrage, installée de manière amovible du moins sur certaines parties du moule d'expansion (9) ; et moyennant quoi la couverture (15) est munie de composantes ferromagnétiques et est utilisée comme l'une des parties du dispositif d'ancrage dont l'autre composante, faisant partie intégrante du moule d'expansion (9), est formée par des éléments d'ancrage (17 ; 21) logés au niveau dudit moule, produisant un champ magnétique et au niveau desquels sont maintenues, lors du processus d'expansion, les bordures de la couverture (15) qui sont situées au-dessus de la cavité (11), moyennant quoi la couverture (15) s'étend au-dessus de la surface des éléments adhérents (5) ; **caractérisé en ce qu'**une couche doublée d'étoffe non tissée ou de feutre est utilisée comme couverture (15), ladite couche étant munie d'un revêtement ferromagnétique s'étendant au-dessus de la surface des éléments adhérents (5).

2. Procédé selon la revendication 1, **caractérisé en ce que** les éléments adhérents (5) sont reçus dans une cavité (11) du moule d'expansion (9), et **en ce que** la couverture (15) avec la bordure de largeur prédéfinie est agencée au-dessus de la cavité (11).

3. Procédé selon la revendication 2, **caractérisé en ce que** du polyuréthane SU-9182 (société Stahl) avec ajout de particules de fer est utilisé pour le revêtement ferromagnétique.

4. Procédé selon la revendication 3, **caractérisé en ce que** la couverture (15) est assemblée par collage (13) à l'élément de blocage par adhérence (3).

5. Procédé selon l'une des revendications 1 à 4, **caractérisé en ce que** la couverture (15) présente en sus une couche d'accrochage en résine synthétique ou en polyuréthane.

6. Procédé selon l'une des revendications 1 à 5, **caractérisé en ce que** sont utilisés, en tant qu'éléments d'ancrage faisant partie intégrante du moule d'expansion (9) et produisant un champ magnétique, des aimants permanents (17 ; 21) qui agissent conjointement avec les bordures de la couverture (15) qui sont situées au-dessus de la cavité (11).

7. Procédé selon la revendication 6, **caractérisé en ce que** pour former des corps en matière plastique expansée avec des éléments de blocage par adhérence (3) logés en profondeur dans ces derniers, un processus d'expansion est effectué au moyen d'éléments de formage (23) contenant la cavité (11), pouvant être insérés dans le moule d'expansion (9) et au niveau desquels les aimants permanents (17) constituant une partie du dispositif d'ancrage sont agencés de telle manière que les bordures de la couverture (15) qui sont situées au-dessus de la cavité (11) y soient maintenues lors du processus d'expansion, en retenant la matière plastique expansée.

8. Elément de blocage par adhérence (3) pouvant être fabriqué suivant le procédé selon l'une des revendications 1 à 7, pouvant être soumis au processus d'expansion dans un corps en matière plastique expansée, avec une couverture (15) ayant une bordure de largeur prédéfinie, située au-dessus de la surface des éléments adhérents (5) de l'élément de blocage et constituant une partie d'un dispositif d'ancrage destiné à l'installation amovible sur certaines parties d'un moule d'expansion (9) servant à la fabrication du corps en matière plastique expansée, moyennant quoi la couverture (15) comporte une couche doublée en étoffe non tissée ou en feutre, qui est munie d'un revêtement ferromagnétique s'étendant au-dessus de la surface des éléments adhérents (5).
